# EUROPEAN PATENT APPLICATION

(11) **EP 3 203 014 A1**
(43) Date of publication of application: **09.08.2017**
(21) Application number: 15846958.5
(22) Date of filing: 01.10.2015
(51) Int. Cl.: E21B 43/12, E21B 43/14, E21B 34/10, F04D 13/08, F16K 15/00, F16K 31/12, F16L 27/00

(54) **WELL COMPLETION SYSTEM AND METHOD, DRILLED WELL EXPLOITATION METHOD, USE OF SAME IN THE EXPLOITATION/EXTRACTION OF DRILLED WELLS, PACKAGING CAPSULE, TELESCOPIC JOINT, VALVE AND INSULATION METHOD, AND VALVE ACTUATION SYSTEM, SELECTION VALVE AND USE OF SAME, CONNECTOR AND ELECTROHYDRAULIC EXPANSION JOINT**

(30) Priority: 01.10.2014 BR 102014024580; 01.10.2014 BR 102014024581; 03.10.2014 BR 102014024851; 03.10.2014 BR 102014024854; 03.10.2014 BR 102014024858; 14.11.2014 BR 102014029576; 17.11.2014 BR 102014028656; 06.02.2015 BR 102015002643
(71) Applicant: Geo Innova Consultoria E Participações Ltda., 42700-000 Lauro de Freitas (BR); Teles E Nogueira Consultoria Ltda., 27915-210 Rio de Janeiro (BR)
(72) Inventor: FERREIRA, Doneivan Fernandes, 21940-070 Rio de Janeiro (BR)
(74) Representative: Trillat, Anne-Cecile
(86) International application number: PCT/BR2015/050166
(87) International publication number: WO 2016/049726

(57) **Abstract**

The present invention describes a completion system for drilled wells comprising valves mechanisms, drives, sensors and devices able to promote an exploration of wells, safer, more efficient and, therefore, more economically viable. Specifically, the present invention comprises a system allowing the installation of smart completion in single or multiple producing zones, comprising valves mechanisms, drives, sensors, between other devices disclosed by the present invention. The present invention is in the fields of petroleum engineering and mechanic engineering.

## Description

### Filed of the Invention

The present invention refers to an exploration system of drilled wells and a method for extracting fluids from the said drilled wells. The present invention is in the fields of petroleum engineering, and mechanic engineering.

### Background of the Invention

Oil prospecting has been the subject of long studies and major technological contributions in recent decades, despite the emergence of new sources of energy use, the prognostics point out many decades ahead of great importance of this type of natural resource.

The smart completion of oil producing wells is a type of completion that allows producing several producing zones together, monitoring and controlling the said producing zones remotely and individually. The use of smart completion enables exploration of marginal reserves and acceleration of hydrocarbon production through joint and controlled production of reservoirs, significantly increasing the recovery factor of the field.

Common oil producing wells, or having smart completion, need at some point, mechanisms to supplement the loss of natural pressure of rocks bearing hydrocarbons. The methods are quite varied, but the gas-lift and Submerged Centrifugal Pumping (BCS) are usually preferred when the wells are submarine and/or with high flow. Depending on the oil viscosity, either of these two methods makes a choice. For high viscosities and high flow rates, BCS is invariably the chosen lifting method.

For proper monitoring of the pressures and temperatures of smart completions in oil reservoirs, electronic sensors are installed in the production column (as deep as possible). Usually this occurs below the capsule where the BCSs are housed. In this way, it is necessary to pass electric cables and hydraulic lines and/or chemical products, which connect the devices to the surface. The most common method of installing these lines and cables is by attaching them to the production columns with metal clips on each sleeve of the tubes. The passage through the capsule, externally, requires a well with larger internal diameters so as to be able to accommodate the capsules with the clamps which will fasten such lines and cables thereto. Often, even with larger well diameters, this is possible, requiring such components to be passed through capsules internal part, resulting in other more constructively complex problems.

Normally, to perform electric cables and hydraulic lines passage inside the capsule, it is necessary to use connectors and/or joints of wet expansion electro-hydraulic connections to interconnect the upper part with the lower one of the capsule. In addition, it is necessary to adjust the length of the whole submerged electric pump assembly with the capsule length. That means, as the BCS assembly will have to adjust in two fixed points inside the capsule, it is necessary to use a wet electro-hydraulic expansion joint, which the oil market also searches for development.

Another major problem faced with conventional compositions, that is, when the submerged electric pump assembly falls joint to the capsules, it is the great probability of objects, which remain in the well, resulting from the production columns, such as metal clamping hooks of the power electric cable, to fall inside the well, mainly in horizontal wells and of great slope. In the column drag, when it is removed for pump changes, one or more hooks may break and fall to the bottom of the well, on the gravel packer. This type of event usually generates the need for complex special operations, called "fisheries", difficult to succeed, with a high risk of well loss. This type of problem is inherent to the BCS lifting method and it is necessary to live with such risk in the best possible way, betting heavily on the reliability of the hook materials.

In addition, the accidental fall of objects in the well is frequent (it is part of the daily operation), but its consequences are disastrous. Whenever this occurs, always accompanied by great uncertainties, the chances of great economic losses in the identification of the fallen object, called "fish", and its subsequent removal, are significant.

Another important aspect, which should be mentioned, is that the average useful life of BCS is 2 years. That is, in this average time interval, a probe workover must occur for BCS replacement that has stopped working. This workover lasts an average of 45 days and, in addition to the high expenses with "probe diaries", it is necessary to internalize the time that the well has stopped producing (loss of profit), awaiting probe for workover. To minimize this, the well is usually equipped with BCS and gas-lift mandrel, which will start as soon as the pump stops working, while the probe does not reach. This time can be long and depends on the demand for probes in the period demanded.

These mandrels are usually positioned below the capsule where the BCS are housed. This prevents its access with slickline, for valve exchanges, as they are below the pumps. The reason for not being positioned above is the possibility of being able to use them also for reverse circulation, "annular x column", removing the largest possible volume of oil from the production column, during workovers for pump exchange. Due to its positioning in an inaccessible place for slickline operation, any problems with the valves can only be solved by removing the entire column with the BCS assembly. It should be noted that gas-lift valves operate optimally with large volumes of gas but they are poorly tolerant under fluid flow scenarios at high flow rates. This is the main reason for failures when reverse circulation is required to "dampen the well" during a workover, limiting the circulation flow, resulting in large losses of probe times (probes are rented per hour).

In view of the scenario that was exposed, there is a great impasse in this sector of oil production. While smart completion increases the well recovery factor by prolonging the time the well will require workovers, at the cost of expensive and complex equipment, the use of BCS inevitably requires the use of probe workovers in the wells to the pump change. This scenario of doubts and uncertainties hinges on oil prospecting companies, how to reconcile the use of more complex equipment to reduce the number of workovers with other equipment that increase the number of workovers due to the short lifespan, especially the BCS assembly.

Searching for the prior art, the following documents regarding the theme were found:

Document CN103382835 discloses one completion system of multiple producing zones provided with packers separating the said producing zones in order to provide a segregation between the said producing zones. Each producing zone has one smart control device, for example, the first producing zone is controlled by one first smart control device, the second producing zone is controlled by a second smart control device, and so on. The production column is associated to all producing zones, but it produces fluids only from that zone where the system decides to produce. This invention's teachings refer on an automated system to detect which zones is producing fluids with less amount of undesired fluids mixed to the fluids of interest. Such document does not suggest how to reconcile the fluids prospection from wells with smart completion using smart mechanisms of high technology, in order to reduce the costs with the wells; mainly those associated to the exchange of the submerged centrifugal pumping assembly and the workovers with probe.

Document US8127845 discloses a completion system of multiple producing zones of hydrocarbons based on the selective segregation of zones that will produce fluids. Through a sliding sleeve, the operator commanding a rod of service is able to isolate a producing zone misaligning the holes present in the inner capsule of the holes present in the outer tube, while when it is desired to produce from another producing zone, this same operator aligns the said holes such that the fluids may move up through the production column. The said alignment and misalignment of holes is made with the service rod and its outer recess that, in contact with the inner recess present in the sliding sleeve transmits the axial movement axial of the service rod in order to align or misalign holes. This document discloses some facilities in the completions, since it is possible to produce several producing zones in a joint or separated manner. For example, if in a certain producing zone the pressure is too higher regarding a second producing zone, it is possible to produce from this producing zone of greater pressure until pressures are balanced, and the hydrocarbons formation occurs simultaneously between several producing zones. Further, it is possible to drain undesired fluids (water, mud, etc) of a certain producing zone, while the further ones are closed, avoiding possible contamination. This document does not disclose a form to reduce the workover time of oil producer wells, mainly those provided with smart completions. Such document also does not disclose a mean to remove the submerged centrifugal pumping assembly in wells with smart completion without the risk of complex and onerous fisheries.

Document US20140083684 discloses a completion system of hydrocarbons producing wells that permeate through multiple formation. The system, among several embodiments presented, is based on packers dividing multiple formation zones and, through a pressure sensor analyzing the pressure in the said formation zone send collected information through the cable. The said information is used to control the flow that is formed from each one of the production zones. Conventional equipments of a completion include gravel, pressure sensor, filtering screen and, mainly, a flow control valve driven by one hydraulic control. The flow control valve is able to totally close the formation zone, or simply restrict part of the production flow, according to the moment needs. The system of the present document has also a device for pumping the production flow, safety valve and formation total isolating valve. The said document does not disclose how to produce multiple formation zones reconciling the minimum need of workover with probe, using the submerged centrifugal pumping equipment, with short lifespan.

Document US 8.651.188 refers a gas lift valve comprising longitudinal tubular structure provided with an entry and an output, a flow path between the entry and the output, and one flow tube arranged inside the tubular structure. Such document has as disadvantage the fact of it does not provide a solution for fluids path of different densities and by the fact of it does not provide a mean to increase the gas flow.

Document US8662184 discloses a capsule system for coating a set of two submerged pumps that may operate simultaneously or in backup system. The said document highlights about the importance of using two pumps in a completion due to the difficulties associated to the said pumps exchange. Besides suggesting that the capsule assembly must be removed from well coating internal part for maintenance, the inventor did not preview facilities in the removal of the pumps assembly from inside the said capsule, such that time-consuming jobs for such operation are necessary.

In addition to the considerable difference to the present invention, the capsule does not have any facility when removing the pump assembly, a further point away from the present invention is the fact that the said capsule comes out of the oil well to replace the pump assembly, since this capsule is joint with the remainder of the assembly.

Document US7150325 has a system of submerged pump comprising a primary coating capsule having internally a capsule of main housing, an inner pump to this and an outer casing involving the said primary coating in order to form an annular space. The primary capsule has in its lower end a polished hole with a sleeve or flapper type valve. The primary coating capsule is fixed to the well through its upper end housing in the primary support. The stamp provides water-tightness to the upper end fit. The main capsule have sealing stamps and a check valve. BCS assembly is located inside the main housing capsule and comprises more specifically, a centrifugal pump, fluids inlet in its lower portion and an engine below the said input. BCS assembly has one adaptor connecting the upper part of the centrifugal pump to the member and this said member connects to the capsule support. The member and the adaptor may be one single piece. The fluid path to outside is made through vertical path and through side path. When the BCS assembly replacement is necessary, one ROV open the upper cap, connects a tool to the hole and, through the lifting system, removes the BCS assembly together with the main housing capsule. A noticeable difference between this document and the present invention is in the fact that BCS assembly is removed together with its coating capsule, besides other capsule is internal to the production well, more weight will be lifted and consequently larger machines are needed, in addition to not being spared any work, since the pump should be disassembled from the said capsule. Other noticeable difference in this document is the fact that it does not preview a secondary system for petroleum lifting, as for example the gas-lift.

Thus, from the literature researched, no documents were found to be anticipating or suggesting the teachings of the present invention, so that the solution proposed here has novelty and inventive activity compared to the prior art.

### Summary of the Invention

Thus, the present invention discloses a completion system for drilled wells having valves mechanisms, drives, sensors and devices able to promote an exploration of wells, safer, efficient and, therefore, more economically viable.

In a first object, the present invention discloses a completion system for drilled wells comprising:
a. valves mechanisms;
b. drives;
c. sensors;
d. expandable joint for adjusting the distance between system components;
e. shut-off valve;
f. system for controlling shut-off valve drive;
g. control valve of operation and maintenance;
h. decoupling/expandable electro-hydraulic connector.

In a second object, the present invention discloses an exploration system of drilled well comprising lifting means of fluid contained in drilled well, being the said lifting mean a set of submerged centrifugal pump and/or gas lift system, the lifting mean being arranged inside the capsule (IT) housed in removable manner inside the drilled well.

In a third object, the present invention has an exploration system of multiple producing zones in drilled well comprising:
a. at least two extraction regions, being the extraction regions isolated from each other in the annular region; and
b. lifting assembly (PA) arranged inside the capsule (IT);
being the annular region a perimeter clearance existing between the lifting assembly (PA) and the inner wall of the capsule (IT).

In a forth object, the present invention has a method of extraction in drilled well comprising exploration system of multiple producing zones where the said system is provided with locators feed-thru (6) with packer seal bore (11) and elastomer for sealing.

In a fifth object, the present invention discloses a capsule for packaging components of exploration system of drilled well comprising a hollow inner region and a housing outer region inside the drilled wells, the said capsule being able of:
a. housing the lifting and control components of fluid extracting contained in the drilled well; and
b. allowing the simultaneous mounting and removal of the said lifting and control components of extracting inside the well.

In a sixth aspect, the present invention has an exploration method in drilled well with capsule for packaging components comprising the following steps:
a. inserting a coating capsule (IT) inside a drilled well;
b. inserting a lifting assembly (PA) inside the coating capsule (IT).

In a seventh object, the present invention has a telescopic joint for adjusting the mounting distance between components of an exploration system of drilled well comprising linear extension means for connecting components of an lifting assembly (PA) and/or for adjusting the total length of lifting assembly (PA).

In an eighth object, the present invention claims an isolating valve for exploration system of drilled well comprising opening and closing drive through pressure control applied in the annular space (AE).

In a ninth object, the present invention has a method for closing and isolating formations in drilled well comprising at least a step wherein a shut-off valve (CV) is controlled by hydraulic means.

In a tenth object, the present invention discloses a system for controlling the drive of isolating valve for exploration system of drilled well comprising opening and closing drive through:
a. pressure control applied in the annular space (AE); and
b. pressure and/or drag resulting from kinetic energy imposed to high fluid.

In a eleventh object, the present invention brings a selecting valve of operation fluid comprising a body of the selecting valve (65) provided with two passages in order to segregate the flow of a primary fluid of the flow of a secondary fluid, being the primary fluid provided with at least one property different from the secondary fluid.

In a twelfth object, the present invention claims the use of selecting valve for controlling operation and maintenance of the gas lift equipment where the selecting valve is as defined in this description and is intended to an exploration system of drilled well.

In a thirteenth object, the present invention discloses an electro-hydraulic (EP) connector for exploration system of drilled well comprising:
a. at least one internal assembly (22); and
b. at least one external assembly (23)
wherein:
- the internal assembly (22) is able to couple to the external assembly (23);
- the internal assembly (22) has electrical connections (87 and 80) and hydraulic connections (76);
- the external assembly has electrical connections (87 and 80) and hydraulic connections (76); and
- the connections are allocated in order to coincide when the coupling takes place.

In a fourteenth object, the present invention brings the electric-hydraulic expansion joint comprising:
a. tubular lower component provided with:
   - thread in the lower part for connecting into the electro-hydraulic connector;
   - sealing in the upper part between the lower component and the inner cylinder;
   - hexagonal lock system able to prevent the internal column turn and to allow the torque transmission between the lower and upper component;
   - lock system for column decline with the extension fixed in the totally closed position;
   - external ring (upper and lower) for aligning external hydraulic and electric lines;
   - bars for filling the empty space between external hydraulic and electric lines; and
   - protection liner of the internal hydraulic and electric lines,
b. tubular upper component provided with:
   - cylindrical top (95) with thread in the center for the inner sliding tube;
   - thread for connection into the production column (96); and
   - peripheral threads (97) for connecting hydraulic and electric lines.

In a fifteenth object, the present invention has an exploration method in drilled well using one electro-hydraulic connector and/or electric-hydraulic joint as defined in this description.

In a sixteenth and last object, the present invention has the use of exploration/completion system of drilled well, being the system as anyone defined above being intended to hydrocarbons extraction in drilled wells, in special petroleum.

These and other objects of the invention will be immediately valued by those skilled in the art and by the companies with interests on the segment, and will be detailed described for its reproduction in the following description.

### Brief Description of the Figures

Aiming to better define and clarify the content of the patent present application, the present figures are presented.
Figure 1 illustrates a first main tube (MT1) for coating the drilled wells. Such first main tube (MT1) has packer seal bore (11) in its lower portion, in order to promote the control of the said drilled well.
Figure 2 discloses an embodiment for the first inner capsule (IT1) that will be used in a well having a single producing zone (7).
Figure 3 illustrates a first lifting assembly (PA1) to be used with the first inner capsule (IT1) in drilled well having one single producing zone (7).
Figures 4.1 and 4.2 illustrate a sequence of removal from the first lifting assembly (PA1) for wells of a single producing zone (7). More specifically, figure 4.1 illustrates one well having the first lifting assembly (PA1) inserted into the first inner capsule (IT1), and figure 4.2 illustrates how is the removal of the first lifting assembly (PA1) without removing the first inner capsule (IT1).
Figure 5 illustrates an embodiment of the present invention, with a smart completion provided with production column (1) with the second inner capsule (IT2) and second lifting assembly (PA2).
Figure 6A and 6B depict the production column (1) sectioned into two parts for a better detailing of its inner components.
Figures 7, 8 and 9, illustrate, respectively, the second lifting assembly (PA2) decoupled from the second inner capsule (IT2) that, in turn, is decoupled from the second main tube (MT2).
The sequence of figures 10.1, 10.2 and 10.3 illustrate a step-by-step of how the handling tool (10) acts in the inner valve (13), in order to allow the fluids to be produced from the perforation region (14).
Figure 11 depicts details of the submerged centrifugal pumping assembly, called pumping device (4).
Figure 12 discloses an embodiment for electro-hydraulic telescopic joint (TJ) used in the production column (1), as the present invention teachings.
Figures 13 and 14 illustrate a comparison of drilled wells having production columns (1) and telescopic joint (TJ). Specifically, figure 13 illustrates a well wherein the production column is not equipped with telescopic joint (TJ), and figure 14 illustrates a production column (1) provided with the said telescopic joint (TJ).
Figure 15 discloses an embodiment of the shut-off valve (CV) used in the production column (1) to stop the fluids production from a drilled well.
Figure 16 illustrates operation details of an embodiment of the shut-off valve (CV) of the present invention.

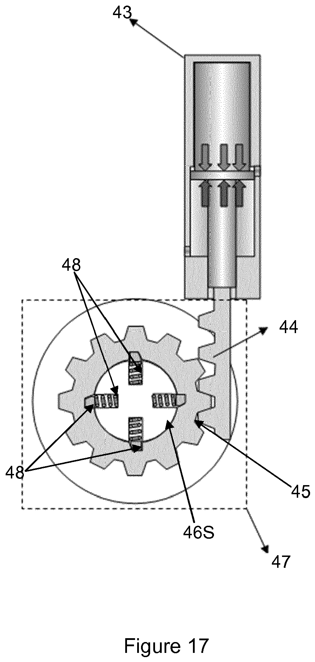

Figure 17 illustrates details of how the mechanism acting directly in the shut-off valve (CV) of the present invention operates.
Figure 18 illustrates an exploded view of the components present In one embodiment for shut-off valve (CV), as the present invention teachings.

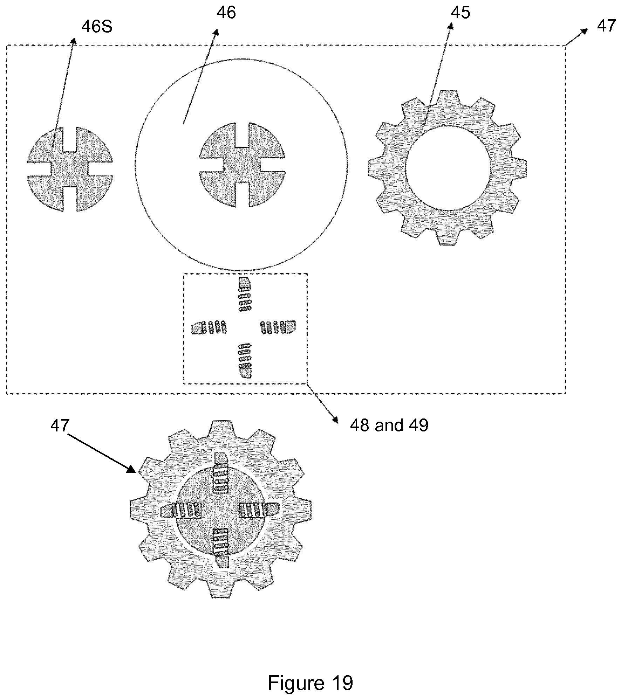

Figure 19 illustrates an embodiment for the mechanism responsible for the fact that the shut-off valve (CV) moves in one single direction.

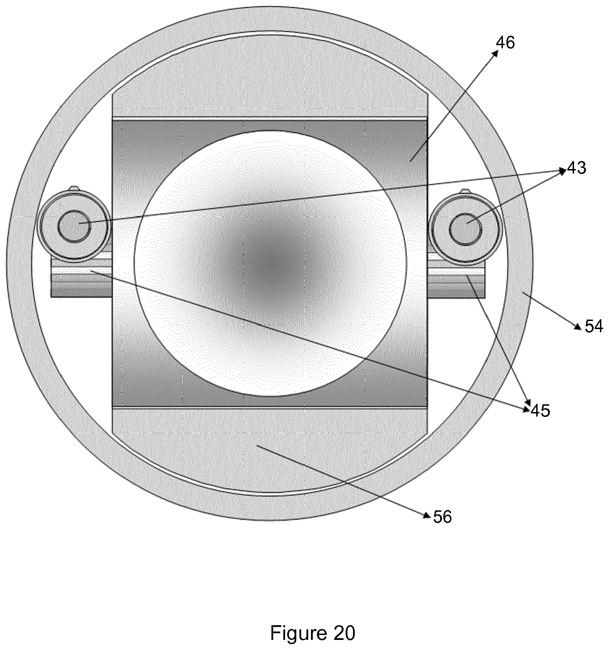

Figure 20 illustrates a side view of the shut-off valve (CV), according to the present invention.

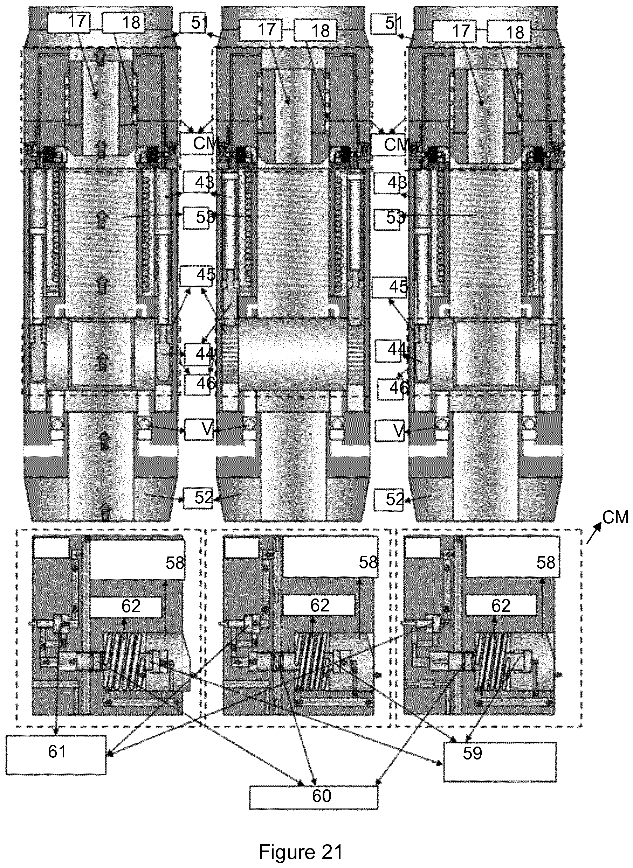

Figures 21.1, 21.2 and 21.3 illustrate the sequence of driving the shut-off valve (CV) associated to a control mechanism (CM). Particularly, figure 21.1 illustrates the shut-off valve (CV) in an open position and with the drilled well producing fluids. The image 21.2 illustrates one instant wherein, after the fluids production stop, the inner sleeve (17), by acting a first actuation mean (18), acts the control mechanism (CM). The image 21.3 illustrates one instant wherein, through the pressure inserted in the annular region of the production column (1), the control mechanism (CM) returns opening the shut-off valve (CV).
Figures 22.1, 22.2 and 22.3 illustrate a second embodiment for the shut-off valve (CV), where the shut-off valve body (46) controls only the ducts interconnecting the annular space (AE) to the duct carrying the produced fluids.

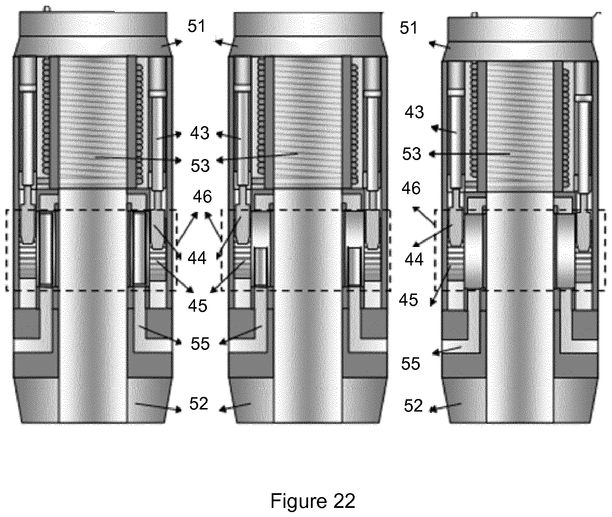

Figure 22 illustrates one comparison in each driving condition of a valve execution of smart completion gradually closing of the present invention.

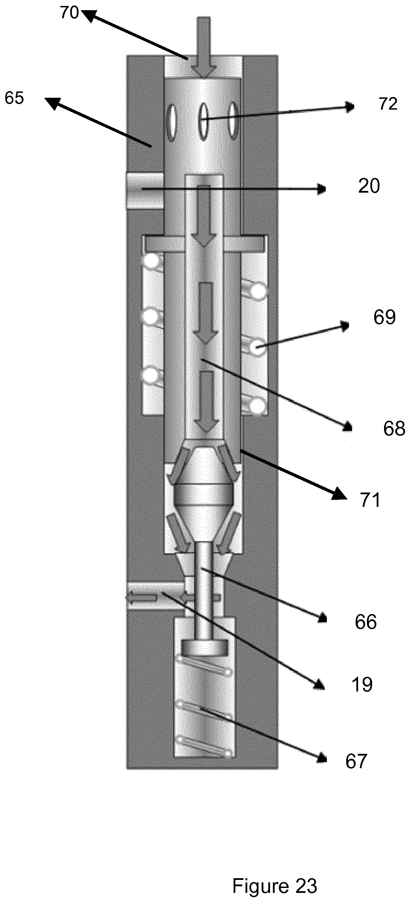

Figure 23 illustrates an embodiment for selective valve (SV) that is installed in the first or second capsule (IT1 or IT2), according to the present invention teachings. In this image, the selective valve (SV) allows the fluids path through a primary hole (19).

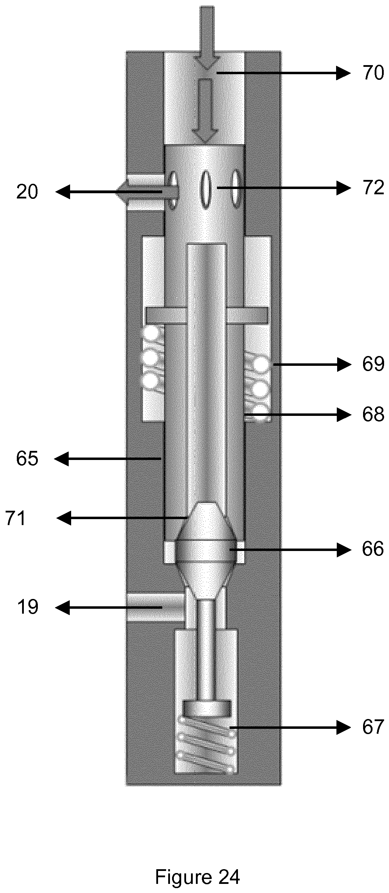

Figure 24 shown an embodiment for selective valve (SV) of the present invention, where the fluids path is being allowed by one secondary hole (20).

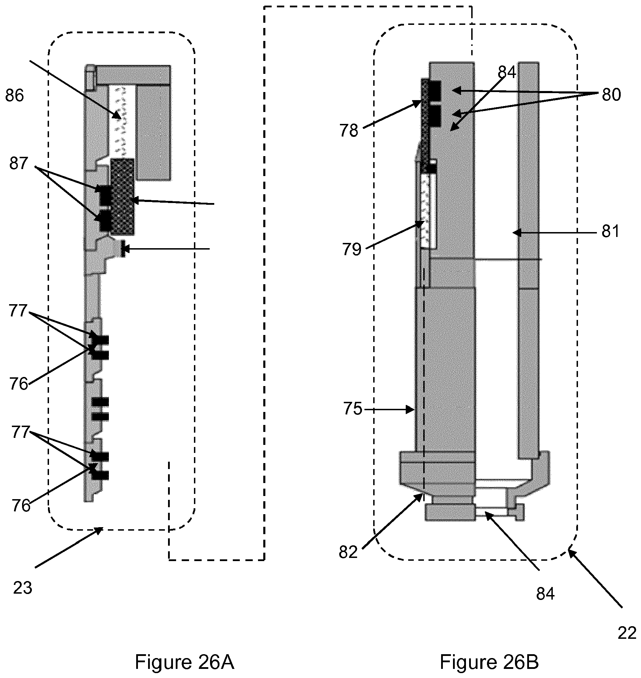

Figure 26 depicts an embodiment of the selective valve (SV) of the present invention applied in a production column (1), in order to promote fluids segregation that enter into the gas lift mandrel (21).
Figure 26A has the external assembly (23) of the electro-hydraulic (EP) connector in the disconnected position, according to the present invention teachings.
Figure 26B has the internal assembly (22) of the electro-hydraulic (EP) connector of the present invention in the disconnected position.

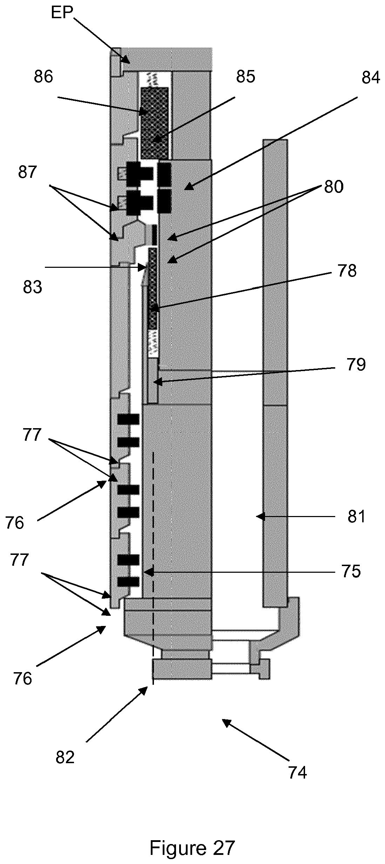

Figure 27 has the electro-hydraulic (EP) connector of the present invention in the coupling position of the inner (22) and outer (23) assemblies.

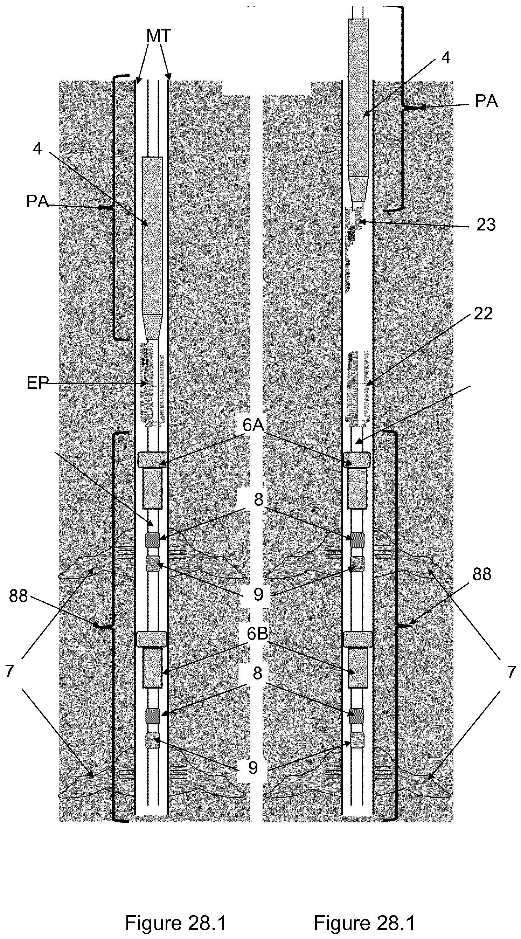

Figures 28.1 and 28.2 illustrate the sequence for removing the pumping device (4) of drilled wells having production columns (1) and electro-hydraulic (EP) connector. Specifically, figure 28.1 illustrates one drilled well with the coupled electro-hydraulic (EP) connector and pumping device (4) attached to the completion remaining. But figure 28.2 illustrates the electro-hydraulic (EP) connector disconnection, where it is possible to note how the pumping device (4) removal works.

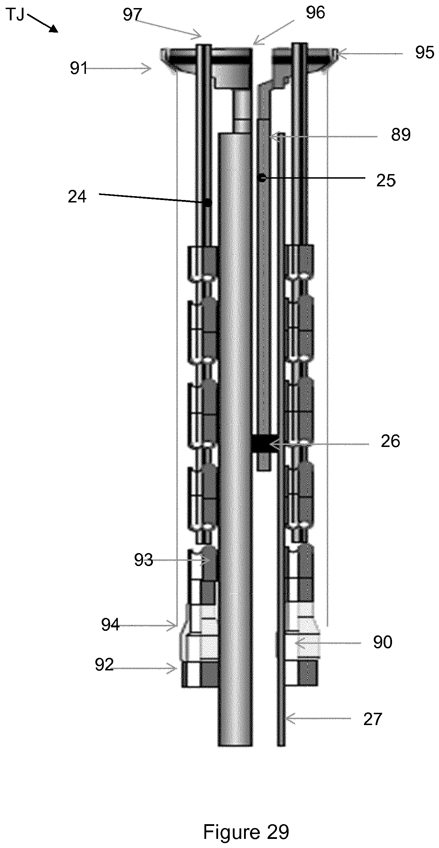

Figure 29 illustrates a second embodiment for telescopic joint (TJ) of the present invention. This mechanism is able to adapt to variations of length experienced in the production column (1) by slipping the outer tube (24) regarding the inner tube (25). A hexagonal lock (26) ensures the torque transmission between outer and inner tubes. This mechanism is fixed to the upper part of the electro-hydraulic (EJ) connector through the outer thread (27).

### Detailed Description of the Invention

The present invention discloses a completion system for drilled wells having valves mechanisms, drives, sensors and devices able to promote an exploration of wells, safer, more efficient and, therefore, more economically viable.

It is, therefore, one first object of the present invention to provide a completion system for drilled wells comprising:
a. valves mechanisms;
b. drives;
c. sensors;
d. expandable joint for adjusting the distance between system components;
e. shut-off valve;
f. system for controlling shut-off valve drive;
g. control valve of operation and maintenance;
h. decoupling/expandable electro-hydraulic connector.

It is a second object of the present invention to provide an exploration system of drilled well comprising lifting means of fluid contained in drilled well, being the said lifting mean a submerged centrifugal pump assembly and/or gas-lift system, the lifting mean being arranged inside the capsule (IT) housed in a removable manner inside the drilled well.

It is a third object of the present invention to provide an exploration system of multiple producing zones in drilled well comprising:
a. at least two extraction regions, being the extraction regions isolated from each other in the annular region; and
b. lifting assembly (PA) arranged inside the capsule (IT);
   being the annular region in a perimeter clearance existing between the lifting assembly (PA) and the capsule inner wall (IT).

It is a forth object of the present invention to provide a method of extraction in drilled well comprising exploration system of multiple producing zones where the said system is provided with locators feed-thru (6) with packer seal bore (11) and elastomer for sealing.

The system of smart complementation proposed comprises multiple producing zones, locators feed-thru (6) with packer seal bore (11) and elastomer for sealing.

The present invention has a smart completion system with at least two producing zones, since the separation of the producing intervals in subzones allows a greater control of each interval and, even producing together, it optimizes the hydrocarbons recovery of each zone. This is because as Smart Completion valves work by restricting, from full opening to full closing, each interval, uniformizing as each zone's flow pressures.

The total recovery of hydrocarbons, when producing the intervals together, presents economic advantage that significantly overcomes the recovery obtained with the individualized production of each interval until its complete exhaustion. This demonstrates one of the advantages of using smart completions, in addition to the demonstrated economy with workovers using the prior art probes, it is also possible to increase the recovery factor of the oil reservoirs, i.e., higher recovery rates with lower production costs.

Although the petroleum industry already has various forms of smart completion, most of them depend on the application of feed thru packers for insulation between producing zones, causing each installation point to have a column squeeze. Electric cables, hydraulic lines and chemicals path is made inside the solid body of these packers that must provide hydraulic seal at the path points. As there is still no consolidated technique of wet electro-hydraulic connectors/disconnectors, the use of these completions today is considered infeasible.

The proposed invention, however, allows the use of smart completions of multiple zonas without the need of packers feed thru. Instead, such elements are replaced by locators feed thru, which elastomeric elements seal polished areas (seal bores) inside the capsule, however, not providing anchorage. The smart completion recovery is, thus, simples and no element (such as: valves, pressure and temperature sensors, chemical injection mandrels) need to be replaced, it its respective tests on the surface are positive.

The insulation of the producing intervals is performed through elastomers as the current ones "Swelling Packer" or other similar elements, with the same function. These go down with the capsule and should not provide anchorage against the coated well.

In an embodiment, the present invention is combined to a system for extracting petroleum comprising at least: i) a coating capsule; ii) a submerged electric pump assembly; wherein the submerged electric pump assembly is installed independently inside the coating capsule.

The extraction capsule comprises: internally polished tube, coating tube, gas lift mandrel housing with selective entry for gas and fluid, formation isolating valve, retention valve, and a sealing anchor with elastomeric elements.

The submerged electric pump assembly comprises: electric cable, pump, electric engine, tubes, and telescopic joint.

Due to system uses an electric pump, it becomes necessary one power electric cable to go down coupled with the production column, attached to the same by clamps, to provide electrical energy for engines moving the centrifugal pumps.

All this submerged electric pump assembly is inside the coating water-tight capsule, isolating the formation produced fluids from the rest of the well, called annular space (space formed between the production coating and the production column + BCS capsule). The higher the flow produced, the greater the power required by the engines, which will have larger external diameters and the capsules that will house them will also need to be larger.

In workovers operations for exchanging the submerged electric pump assemblies, the non-solid capsule remains in the well, allowing any object that falls into the well to be easily recovered (since they will be inside the capsule). This very important aspect prevents such objects from falling above the "gravel packer" which would result in the need for a special complex and risky "fishing" operation, which could lead to the loss of the well.

With respect to the stops of the submerged electric pump assemblies for damage, the option to continue producing the well using gas-lift can be used with the gas injected by the annulus entering the gas-lift mandrel housing to reach the gas-lift mandrel. The gas-lift mandrel housing can direct the flow into the mandrel or into the column, depending on the flow of pumped fluids. That is, the system of the present invention is selective regarding the pumped flows and the types of fluids: whether gas or liquid. This is critical for preserving high-speed gas-lift valves generated by fluids pumped into the annular space during damping.

It is a fifth object of the present invention to provide a capsule for packaging components of the exploration system of drilled well comprising a hollow inner region and a housing outer region inside the drilled wells, the said capsule being able of:
a. housing lifting and control components for extracting fluid contained in the drilled well; and
b. allowing simultaneous mounting and removal of the said lifting and control components for extracting from well inside part.

The proposed system aims to overcome all deficiencies of the current systems with joint capsule with significant economic advantage and mitigation of problems risks related to special operations of complex "fisheries".

The proposed system comprises at least: i) one coating capsule; ii) one submerged electric pump assembly; wherein the submerged electric pump assembly is independently installed inside the coating capsule.

The proposed system, when disentangling the capsule of the submerged electric pump assembly, results in a greater flexibility in the completions with simpler mounts in the surface. Thus, the "non-joint capsule" is mounted and declined in the well, just after the lower completion decline, normally composed of screens of the "gravel pack" system (isolating valve of the formation and "gravel packer").

The method for extracting petroleum comprises the steps of inserting a non-joint capsule inside the drilled well; and inserting a submerged electric pump assembly inside the non-joint capsule.

In one embodiment, the extraction capsule comprises: internally polished tube, coating tube, gas-lift mandrel housing with selective entry for gas and fluid, formation isolating valve, retention valve, and a sealing anchor with elastomeric elements.

In one embodiment, the submerged electric pump assembly comprises: electric cable, pump, electric engine, tubes, and telescopic joint.

It is a sixth object of the present invention to provide an exploration method in drilled well with capsule for packaging components comprising the following steps:
a. inserting a coating capsule (IT) inside a drilled well;
b. inserting an lifting assembly (PA) inside the coating capsule (IT).

In one embodiment, the steps of the method occur independently from each other.

Because the system uses an electric pump, it is necessary the lowering an electric power cable joint to the production column, fastened to the same by clamps, to provide electrical energy for engines moving the centrifugal pumps.

All this submerged electric pump assembly is inside the coating water-tight capsule, isolating the formation produced fluids from the rest of the well, called annular space (space formed between the production coating and the production column + BCS capsule). The higher the flow produced, the greater the power required by the engines, which will have larger external diameters and the capsules that will house them will also need to be larger.

In workovers operations for exchanging the submerged electric pump assemblies, the non-solid capsule remains in the well, allowing any object that falls into the well to be easily recovered (since they will be inside the capsule). This very important aspect prevents such objects from falling above the "gravel packer" which would result in the need for a special complex and risky "fishing" operation, which could lead to the loss of the well.

According to the stops of the submerged electric pump assemblies caused by damage, the option to continue producing the well using gas-lift can be used with the gas injected by the annulus entering the gas-lift mandrel housing to reach the gas-lift mandrel. The gas-lift mandrel housing can direct the flow into the mandrel or into the column, depending on the flow of pumped fluids. That is, the system of the present invention is selective regarding the pumped flows and the types of fluids: whether gas or liquid. This is critical for preserving high-speed gas-lift valves generated by fluids pumped into the annular space during damping.

Advantages presented by the present invention comprise: fast assembly and lowering of the capsules; fast assembly of pumping assemblies; possibility of pump exchanges without the need to remove the capsules; possibility to eliminate maneuvers of balances and dummy run; elimination or minimization of the possibility that "fishes" inside the well generate complex and risky "fisheries" with great financial losses and even loss of well; possibility of adding recoverable Mandrel of Gas Lift (MGL) with the BCS assemblies; possibility to perform TFR with BCS and superior completion only by changing the pumps used in each operation without the need to remove the capsule.

It is a seventh object of the present invention to provide a telescopic joint for adjusting the mounting distance between components of an exploration system of drilled well comprising linear extension means for connecting components of an lifting assembly (PA) and/or for adjusting the total length of lifting assembly (PA).

In one embodiment, the telescopic joint comprises means for passing the functional devices through the joint; and means for regulating the total length of the joint.

In one embodiment, functional devices comprise hydraulic lines and/or electric cables, for remote feeding of components of the system components of exploration of drilled well.

In one embodiment, functional devices comprise piping of chemicals able to inject them in predefined regions of the drilled well, to ease the fluid extraction/lifting process.

In one embodiment, the means for length regulation comprise expandable hydraulic units.

In one embodiment, the joint comprises: outer liner (32); upper concentric sleeve (33); outer flow tube (34); cable (35) for pressure and temperature sensor; expandable hydraulic unit (36); sliding sleeve (37); inner liner (38); inner flow tube (39); lower concentric sleeve (40); driving line (41); and mechanical lock (42).

In one embodiment, the present invention provides a process for extracting petroleum using a telescopic joint as previously defined.

The present invention has the following advantages: enable the use of smart completions of multiple zones; reduce welding times in workovers for exchanging sets of joint BCS with smart completion; and allow completions with hydraulic valves remotely controlled.

It is an eighth object of the present invention to provide an isolating valve for exploration system of drilled well comprising opening and closing drive through pressure control applied in the annular space (AE).

The present invention comprises a valve for closing and isolating hydrocarbons-producer formations, being such valve preferably controlled by hydraulic means.

In one embodiment, the valve for closing and isolating is exclusively controlled by hydraulic means.

In one embodiment, the valve for closing and isolating comprises a cylindrical wrap (54), lower connection flange (52), flange holes (55), valve shell (56), shut-off valve body (46), grooved cylindrical shaft (46S), spiral reservoir (53), linear actuator (43) and upper connection flange (51).

In one embodiment, the valve for closing and isolating comprises in the same body holes offset 90 degrees such that such holes alternate the valve opening for production column and the closing for annular space.

In one embodiment, the valve for closing and isolating is arranged above the lower completion allowing the reverse circulation for cleaning the column without flow rate limit.

In one embodiment of the present invention, a method for closing and isolating hydrocarbons-producer formations comprises at least one step wherein a shut-off valve is controlled by hydraulic means.

In a ninth object, the present invention has a method for closing and isolating formations in drilled well comprising at least one step wherein a shut-off valve (CV) is controlled by hydraulic means.

In one embodiment, the method comprises an additional step of reverse circulation for column cleaning without flow rate limit.

In one embodiment, the method comprises a step of positions switching of the shut-off valve between the opening for production column and the closing for annular space.

The valve of the present invention has several advantages as: allow closing the well and isolating the formation by hydraulic action in the annular space of the wells; eliminate the control line for its drive and control, making the wellhead equipment project simpler; allow several operations of reverse circulations with high flow rates, improving wells' cleaning; allow performing TFR (Formation test for coated well) with bottom closing; simplify the control mechanism increasing the reliability of it (there is no index system); and allow the variation in the opening area to the flow.

It is a tenth object of the present invention to provide a system for controlling the isolating valve driving for exploration system of drilled well comprising opening and closing drive through:
a. pressure control applied in the annular space (AE); and
b. pressure and/or drag resulting from kinetic energy imposed to high fluid.

In one embodiment, illustrated in figures 21.1, 21.2 and 21.3, the valve positions are indicated during a flow (figure 21.1) during a production stop (figure 21.2) and in the well reopening (figure 21.3) wherein it becomes necessary to annular space pressurization. By doing so, the fluid will take two paths. The first will pressurize acting pistons that will decline and rotate the sprockets, joint to the actuator cylinder, through two small racks. Turning the actuator cylinder counter-clockwise will let the well open. The second path taken by the annular fluid will have to overcome the opposite effort in the differential piston exerted by the pressure in the column. As the area of the differential piston is much larger in the area that acts on the pressure in the column, in order to obtain the balance of forces, high pressure must be applied to the opposite side where the annular pressure, whose area is much smaller, is applied. By pushing the differential piston, the path will be closed to the pressures coming from the column and released to those applied in the annular.

Thus, the hydraulic actuator is pushed to the right, closing the path of the fluid that was pumped to power the actuator piston, responsible for opening the valve. The pressure will be "mopped" until the hydraulic actuator is again pushed to the left, the drainage hole coinciding with the access channel to the actuator pistons. When this occurs, all "mopped" pressure will drain into the column and the nitrogen compressed into the nitrogen spiral reservoir by pushing up the actuator pistons that will force the rotation of the gear clockwise closing the well. It should be noted that the "trigger" of the bottom closure process is the mechanical actuator driven whenever the flow of the well is interrupted. This occurs because when the flow occurs, the upstream x downstream pressure differentials generated in the choke tube can push it upwards, overcoming the force of a spring. At this time, another spring pushes the mechanical actuator to the right, closing the path for pressures from the column, keeping the hydraulic actuator in its position of closing the drainage hole. By interrupting the flow, for any reason, the upstream x downstream pressures acting on the choke tube become equalized and the spring is able to push the choke tube downwards, which will consequently force the hydraulic and mechanical actuator assembly to the left, causing the drainage hole to return to the position coinciding with the access channel to the actuating pistons which in turn will immediately release the pressure that had been "mopped" in the spiral nitrogen reservoir.

In an embodiment, the smart completion and gradual opening and closing valve, illustrated in figures 22.1, 22.2, 22.3, where the drawings indicate the valve positions totally open (22.1), partially open (22.2) and totally closed (22.3). For using the innovative actuator cylinder concept in smart completion valves, it was necessary to divide the system into 2 or 4 smaller actuator cylinders positioned laterally to the axis of the production column so that the actuation of these, closing or restricting a zone flow, did not affect the production of the others. It is highlighted that, in a smart completion, the objective is to produce or inject in several zones together with independent control for each interval. Each interval will produce or inject through its respective valve, the flow of which will flow or enter laterally from the annular space into the column where it will mix with the production of the other zones. The amount of teeth in the rack will determine the size of the opening in the actuator cylinder per pressure x depressurization cycle. In this way, it is understood that the opening and closing process is not continuous, but stepped, although such steps can be formed by small increments.

It is a eleventh object of the present invention to provide a selecting valve of operation fluid comprising a selecting valve body (65) provided with two passages in order to segregate the flow of one primary fluid of the flow of one secondary fluid, being the primary fluid provided with at least a property different from the secondary fluid.

It is a twelfth object of the present invention to provide the use of selecting valve for controlling operation and maintenance of gas lift equipment where the selecting valve is as defined in this description and is intended to an exploration system of drilled well.

Oil reservoirs need, at some point in their productive lives, a method to supplement the energy (pressure) of hydrocarbon bearing rocks. The preferred artificial lifting methods in the underwater completions and/or high discharge wells are: gas lift and/or BCS.

Gas lift mandrels are devices with a side pocket, eccentric relative to the center of the production column, where valves will be housed which will allow one-way flow of the annular space (space between the coating and the production column) into the production column. Typically, these mandrels, with their respective valves, are positioned as deeply as possible inside the wells. These valves allow the gas passage being injected into the annular space to gasify the produced fluids, reducing the density of the mixture and allowing the pressure energy of the reservoir rocks to be enough to cause the flow to reach the production facilities. The mandrel itself has only holes that, without its respective valve housed in the pocket, would pass in both directions "column x annular". However, with the valve installed, this path is only in the "annular x column" direction.

Because it is a point of communication between the annular and the production column, it is there that the circulation of completion fluids occurs when it is necessary to remove the oil from the columns and to damp the wells. When there is circulation without a probe being on the well, this may mean that the gas-lift valve is housed in the pocket of its respective mandrel and in this case the flows of circulated fluids should be greatly reduced so as not to damage these valves. During a workover, if this valve can be removed with slickline, it will be possible to increase the flow rate sufficiently, and almost without restrictions, for an efficient cleaning of the column.

It should be noted that the damage caused in a gas lift valve has the potential to result in probe workover (resulting in significant production costs). Mainly, if the damage is in the "check valve" (valve that allows one way flow "annular x column") of the valve. In this case, the produced fluids fill the annular space and the column is no longer a safety barrier.

The device, hereinafter referred to as the selective valve, proposes to be an advantageous alternative to the current gas lift mandrels, allowing liquid and gas flows at the maximum possible flow rates, reducing probe times and providing more effective column cleaning during workovers. This device is specially designed to be positioned below BCS assemblies and can be used at any point in the production column.

When the proposed device is used together with BCS (Submersible Centrifugal Pumps) and positioned below them, it is even possible to change the conventional gas lift mandrel (when removing the "motor-pump" assemblies) without needing to remove the selective valve.

The gas lift valve applied in the selective valve of the present invention is provided with two passages being them one primary hole (19) and one secondary hole (20), in order to segregate the flow of one primary fluid of the flow of one secondary fluid, being the primary fluid provided with at least a property different from the secondary fluid, additionally the valve is composed of the following items:
- valve body (65);
- sealing piston (66) comprising at least one primary actuation mechanism (67);
- primary hole (19);
- flow tube (68) comprising at least one secondary actuation mean (69); and
- secondary hole (20);
wherein:
- primary (19) and secondary (20) holes transversally arranged in the valve body (65);
- the sealing piston (66) and the flow tube (68) longitudinally arranged inside the valve body (65);
- the sealing piston (66) aligned with the flow tube (68) and arranged in the lower end (71) thereof.

The distinction property of one primary fluid from one secondary fluid is selected from: compressibility, viscosity, density, pressure or a combination thereof. Being preferably the gas lift valve applied in the selective valve (SV) of the present invention positioned below the set of submerged centrifugal pumps (BCS), and the lower end of the flow tube (71) geometrically compatible with the sealing piston head (66).

Regarding the primary actuation mechanism (67) and secondary actuation mechanism (69), preferably such actuation means are each one a spring, but not limited to it. However, the secondary actuation mechanism (69) spring comprises elastic constant higher than elastic constant of the primary actuation mechanism spring (67).

The selective mandrel is composed of the following items:
- Tube with perforation (73);
- Selective valve, as defined above;
- Centralizer with upper elastomer;
- Conventional gas-lift mandrel (21); and
- Centralizer with lower elastomer.

It is a thirteenth object of the present invention to provide an electro-hydraulic (EP) connector for exploration system of drilled well comprising:
a. at least one internal assembly (22); and
b. at least one external assembly (23)
wherein:
- the internal assembly (22) is able to couple to the external assembly (23);
- the internal assembly (22) has electrical connections (87 and 80) and hydraulic connections (76);
- the external assembly has electrical connections (87 and 80) and hydraulic connections (76); and
- the connections are allocated in order to coincide when the coupling occurs.

It is a fourteenth object of the present invention to provide an electric-hydraulic expansion joint comprising:
a. tubular lower component provided with:
   - thread in the lower part for connecting into electro-hydraulic connector;
   - sealing in the upper part between the lower component and the inner cylinder;
   - hexagonal lock system able to prevent the internal column turn and to allow the torque transmission between lower and upper component;
   - lock system for column decline with the extension fixed in the totally closed position;
   - external ring (upper and lower) of external hydraulic and electric lines alignment;
   - bars for filling the empty space between external hydraulic and electric lines; and
   - protection liner of internal hydraulic and electric lines,
b. tubular upper component provided with:
   - cylindrical top (95) with thread in the center for inner sliding tube;
   - thread for connection into the production column (96); and
   - peripheral threads (97) for connecting hydraulic and electric lines.

It is a fifteenth and last object of the present invention is to provide an exploration method in drilled well using an electro-hydraulic connector and/or electric-hydraulic joint as defined in this description.

In one embodiment, electric connectors (80, 87) have protection mechanism (78, 85).

In one embodiment, protection mechanisms (78, 85) are driven by mechanic elastic device (79, 86).

In one embodiment, hydraulic connectors have sealing (89) in order to ensure complete water-tightness thereof.

The present invention has also the following advantages: enable the use of smart completions of multiple zones; reduce welding times in workovers for exchanging sets of joint BCS with smart completion; and allow completions with hydraulic valves remotely controlled.

For purposes of the present invention, the term "annular region" consists of the region of clearance between the inner wall of the removable capsule and the elevation assembly or the pumping duct, as mounting arrangement. The annular region generally comprises the region between the main duct, whereby the well produces fluids, and the coating of the said well.

All objects of the present invention, in one embodiment, are intended for the exploration of drilled wells for extraction/elevation of hydrocarbons, of which may be listed: petroleum; gas; bitumen; or any other equivalent, of commercial interest for processing and/or application in several areas of the industry.

### Example 1. Preferred embodiment

The examples here shown aim to exemplify only one of the several manner to perform the invention, however not limiting the scope thereof.

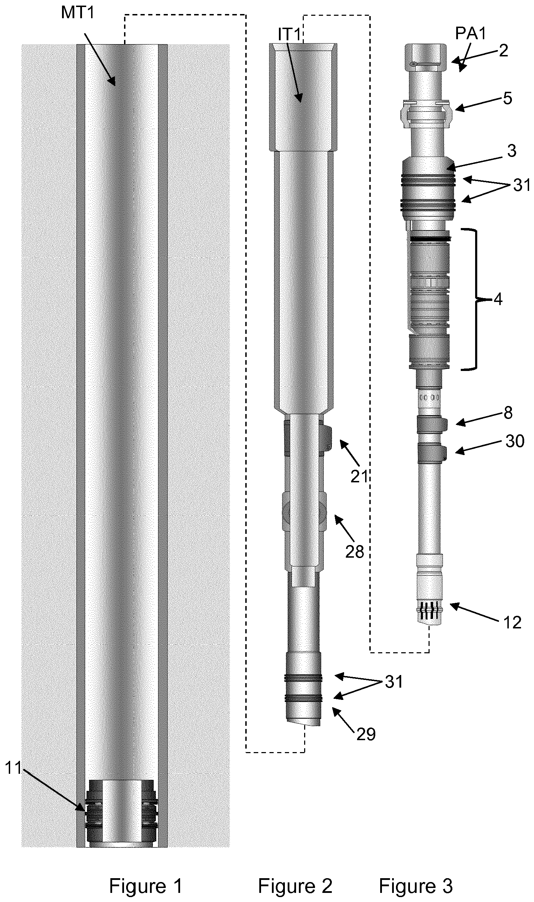

According to figure 1, there is one first main tube (MT1) having packer seal bore (11) in its lower portion. Inside the said first main tube (MT1) it is associated a first inner capsule (IT1) provided with gas lift mandrel (21), isolating valve (28) and primary coupling (29). The first inner capsule (IT1) also has an upper polished region (15A) for seating the packer feedthru (3).

Internally associated to the first inner capsule (IT1), it is seen the first lifting assembly (PA1) provided with flapper valve (2), fixation clamp (5), packer feedthru (3), pumping device (4), pressure sensor PDG (8), injection valve (30) and secondary coupling (12). When inserted into the first main tube (MT1), the primary coupling (29) present in the first inner capsule (IT1) is coupled into the packer seal bore (11) and seals fluids leakage through an elastomeric sealing (31) present in the said primary coupling (29).

When associating the first lifting assembly (PA1) to the first inner capsule (IT1), the secondary coupling (12) is responsible for opening the isolating valve (28) present in the first inner capsule (IT1).

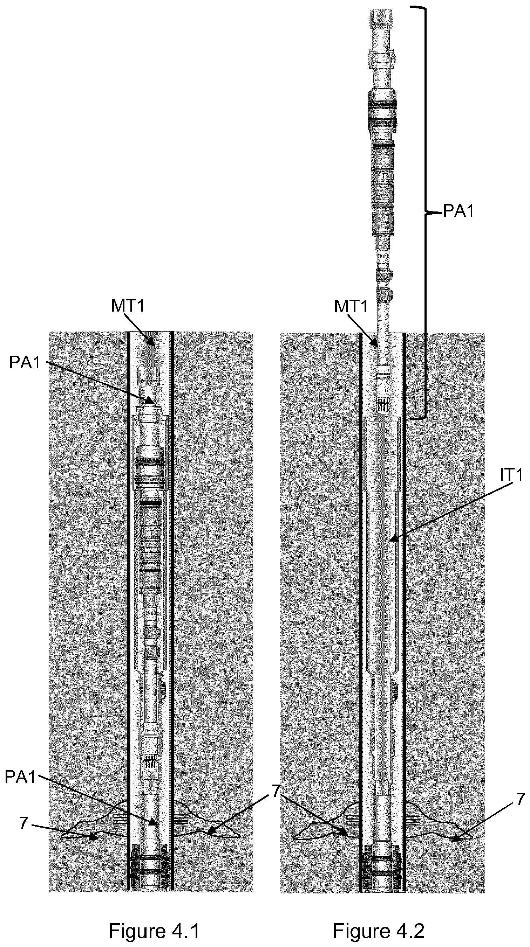

Figures 4.1 and 4.2 illustrate a sequence of removal of the first lifting assembly (PA1) for wells of a single producing zone (7). Figure 4.1 illustrates the first lifting assembly (PA1) inserted into the first inner capsule (IT1) that, in turn, is inserted into the first main tube (MT1). In this position, the primary coupling (29) present in the first inner capsule (IT1) is inserted into the packer seal bore (11) present in the first main tube (MT1). In turn, secondary coupling (12) is inserted into the isolating valve (28), in order to keep it opened, allowing fluids production from the drilled well.

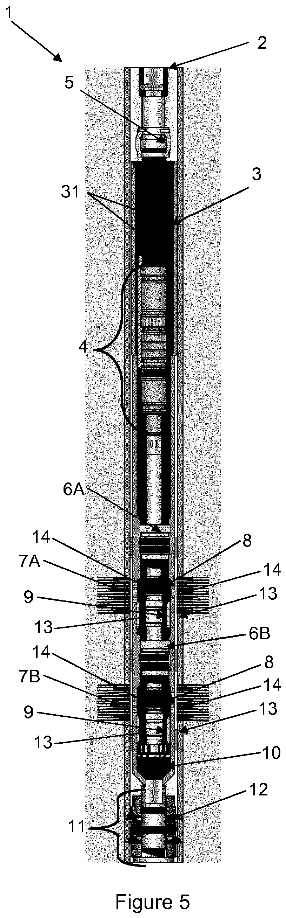

Figure 5 illustrates the complete mount of the lower part of a production column (1) for well with more than one producing zone (7), the known completions of multiple producing zones. It is noted the presence of flapper valve (2) preventing fluids return downstream thereof, fixation clamp (5), and packer feedthru (3) responsible for sealing and seating the second lifting assembly (PA2) inside the second inner capsule (IT). The pumping device (4) is located below the packer feedthru (3). The locator feedtrhu (6) are responsible for isolating several producing zones that may be met by the present invention. In image 5, the upper locator feedtrhu (6A) separates the first producing zone (7A) from the upper region, where the pumping device (4) is located. A pressure sensor PDG (8) and a smart valve (9) are previewed to imply in the well operation, according to external commands, or pre-scheduled. Lower down, its is found the lower locator feddtrhu (6B) segregating a second producing zone (7B) and, then as in the first producing zone (7A), the said second producing zone (7B) has pressure sensor PDG (8) and smart valve (9), besides a handling tool (10). Still in image 5, there is the packer seal bore (11) responsible for housing the secondary coupling (12). Finally, it is seen in the figure 5, inner valves (13) present in the first producing zone (7A) and in the second producing zone (7B), such that to allow the produced fluids in the said zones to permeate the inner part of the column through screwed holes (14), also present in both producing zones (7A and 7B). Inner valves (13) will be detailed along the description. In this image, it is shown how to apply the knowledge of using a capsule to have the submerged centrifugal pumping assembly in completions of multiple producing zones.

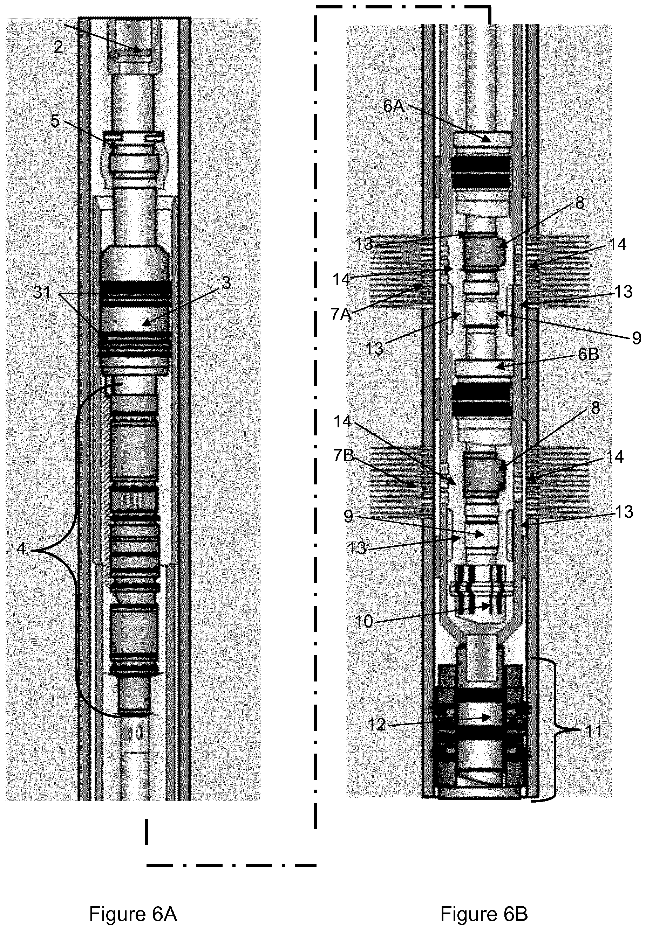

Figures 6A and 6B detail mechanisms inside the production column (1) for multiple producing zones, in order to promote a better view thereof. Thus, figure 6A details the flapper valve (2) preventing the return of the produced fluids and those already pumped downstream thereof, the fixation clamp (5) fixing electric cables and hydraulic lines, among others, the packer feedthru (3) centralizing and fixing the second lifting assembly (PA2) inside the second inner capsule (IT2) and the pumping device (4) supplying energy to the fluid that is being produced from the drilled well, in order to pump it and remove it, being the said pumping device (4) located below the packer feedthru (3). Figure 6B details the upper locator feddtrhu (6A) separating the first producing zone (7A), where it is also noted a pressure sensor PDG (8) and a smart valve (9) arranged for implying in the well operation, according to external commands, or pre-scheduled. Below it is noted the lower locator feddtrhu (6B) segregating a second producing zone (7B) also with pressure sensor PDG (8) and smart valve (9).

Also in figure 6B, it is clear the view of the handling tool (10) responsible for opening inner valves (13) present in the first producing zone (7A), and in the second producing zone (7B), in order to allow the produced fluids in the said zones to permeate the column inner part through screwed holes (14), also present in both producing zones (7A and 7B). In this image, it is clear that inner valves (13) are open and screwed holes (14) allow fluids entering until the second lifting assembly (PA2). Finally, it is noted the packer seal bore (11) having the secondary coupling (12).

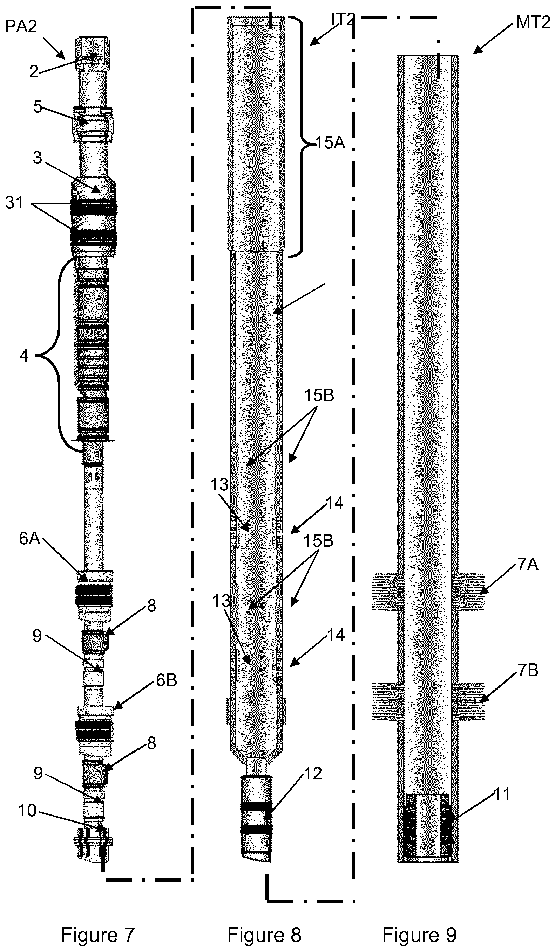

Figure 7 illustrates the second lifting assembly (PA2), which may be easily removed from inside the second inner capsule (IT2), in order to allow the pumping device (4) exchange without the need of onerous workovers. Figure 8 discloses the second inner capsule (IT2) with upper polished region (15A) for seating the packer feedthru (3), besides the inner valves (13) allowing the produced fluids passage through screwed holes (14). The lower polished regions (15B) are useful for correct seating of the upper and lower locator feddtrhu (6A and 6B). The secondary coupling (12) ends the second inner capsule (IT2). The said second inner capsule (IT2) is a tube aiming to have the second lifting assembly (PA2), in order to avoid possible parts to loose from the said second lifting assembly (PA2) when removing this. When having the parts that possibly come to detach from the second lifting assembly (PA2), the second inner capsule (IT2) avoids the parts to go to the bottom of the well and generate onerous and complex fisheries. The second inner capsule (IT2) may be easily removed, clean and replaced in the second main tube (MT3). Finally, image 9 illustrates the second main tube (MT2), which is the coating tube of the production column (1). The said second main tube (MT2) is responsible for having screwed holes (14), allowing the produced fluids to pass to the inner part of the production column. Also about the second main tube (MT2), the same has packer seal bore (11) in its lower part so the well may be closed when it is not with the second inner capsule (IT2) dully positioned.

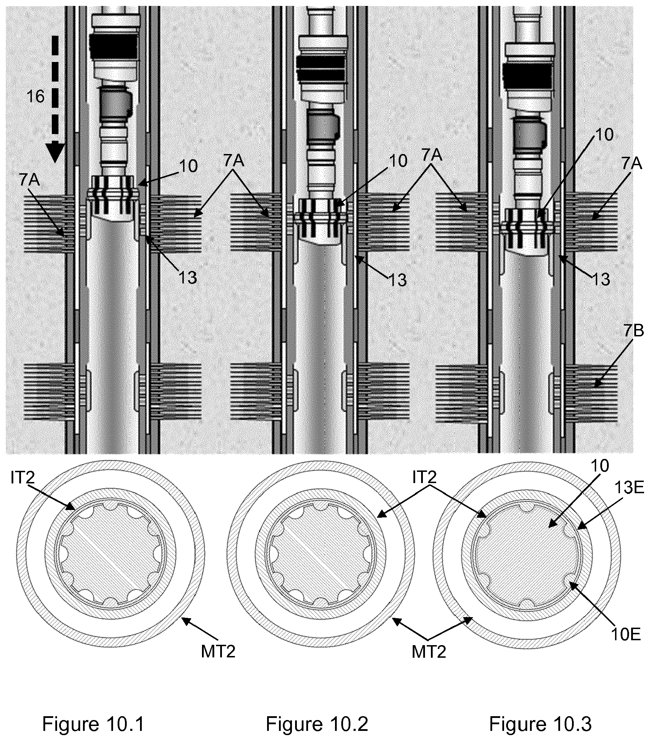

Figures 10.1, 10.2 and 10.3, illustrate how inner valves (13) are operated by the handling tool (10). Figures 10.1, 10.2 and 10.3 were arranged with a representation in plant (arranged in the lower part of the in lifting views) of the inner part of the handling tool (10) and of the inner valve (13), in each one of the situations depicted. The vector (16) indicates the handling tool (10) displacement that, according to figure 10.1, is in a position where the handling tool (10E) splines are conflicting with the inner valve (13E) splines, being then, the movement (vector 16) imposed by the handling tool (10) is transferred to the inner valve (13), that also starts to displace in the vector direction (16). Figure 10.2 depicts this movement in one intermediate instant, also with handling tool (10E) splines displaced from inner valve (13E) splines. Finally, image 10.3 depicts one instant that, through the handling tool (10) turn, the handling tool splines (10E) are aligned with the inner valve (13E) splines, such that the said handling tool (10) keeps its movement in the vector direction (16), however the inner valve (13), provided with the inner valve splines (13E), keeps stopped. Also, in image 10.3, it is realized that screwed holes (14) were opened, allowing the fluids to enter from the producing upper zone (7).

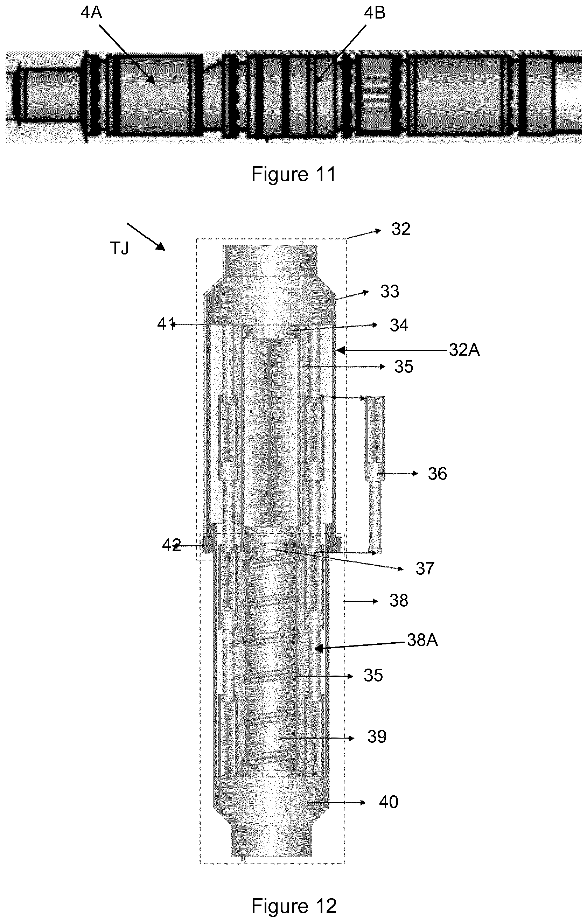

Figure 11 illustrates the pumping device (4), with one electric engine (4A) coupled to a submerged centrifugal pump (4B). This set is known by those skilled in the art as set of BCS, or set of submerged centrifugal pump.

According to figure 12, the electro-hydraulic telescopic joint (TJ) of the present invention is composed of: outer liner (32), upper concentric sleeve (33), outer flow tube (34), cables (35), expandable hydraulic unit (36), sliding sleeve (37), inner liner (38), inner flow tube (39), lower concentric sleeve (40) and driving line (41) for driving the mechanical lock (42).

The mounting of the electro-hydraulic telescopic joint (TJ) is made by associating between outer liner (32) and inner liner (38). The upper concentric sleeve (33) has one central hole for associating the outer flow tube (34) and several concentric smaller holes where expandable hydraulic units (36) are associated. Through the upper annular space (32A), in communication with the lower annular space (38A) hydraulic flow is passed for driving valves and chemicals for chemical injection mandrels. Expandable hydraulic units (36) are coupled one in another, in order to achieve, when totally open, a length greater than the total course of the electro-hydraulic telescopic joint (TJ) totally open. This makes necessary to avoid efforts transfer being for these units and for outer liners (32) and inner liners (38). The cable (35) is mounted in spiral way around the inner flow tube (39). Along the outer flow tube (34) the cable (35) is attached, kept slightly pulled by the sliding sleeve (37). The said sliding sleeve (37), when traveling the inner flow tube (39) length, through contraction, or expansion of the electro-hydraulic telescopic joint (TJ), causes the cable (35) spirally arranged around the inner flow tube (39) to be compacted, or extended, without damaging the said cable (35).

The set composing the named outer liner (32) is formed basically by the expandable hydraulic units (36), outer flow tube (34) and upper concentric sleeve (33). The said outer liner (32) is associated to the inner liner (38) by coupling the outer flow tube (34) to the inner flow tube (39) through the sliding sleeve (37). Once associated to the outer flow tube (34), the sliding sleeve (37) slides around the inner flow tube (39), promoting the expansion and contraction of the electro-hydraulic telescopic joint (TJ). Optionally, it is possible to add to the electro-hydraulic telescopic joint (TJ) a mechanical lock (42) that, through the driving line (41), allows the relative movement between the sliding sleeve (37) and the inner flow tube (39). In a summarized manner, it is highlighted that the mechanical lock (42) is used to lock or not the electro-hydraulic telescopic joint (TJ).

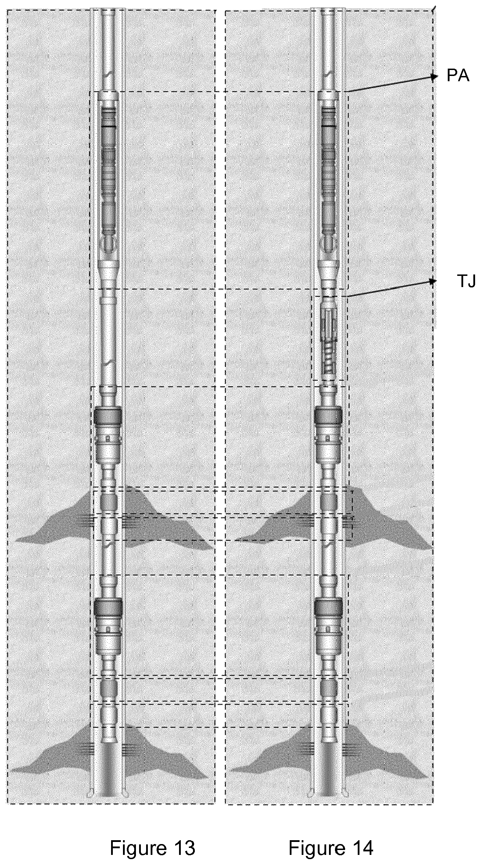

Figures 13 and 14 illustrate one comparison of drilled wells having production columns (1) and telescopic joint (TJ). Specifically, figure 13 illustrates one well wherein the production column is not equipped with telescopic joint (TJ), and figure 14 illustrates a production column (1) provided with the said telescopic joint (TJ). An example of comparison of the application for "Electro-Hydraulic Telescopic Joint (JTEH)" may be seen and compared in Figures 13 and 14.

In figure 13, without the electro-hydraulic telescopic joint (TJ), a whole lifting assembly (PA) is engaged in two points, which are packer feedthru (3). As these elements normally are unfixed from the production coatings by applying traction, two of these elements duplicate necessary efforts for "unseating" of these devices, what is not normally achieved by overcoming the capabilities of the production tubes. Thus, special operations significantly would be necessary to separate the lifting assembly part (PA) from the production column (1) remaining.

In figure 14, the electro-hydraulic telescopic joint (TJ) allows the lifting assembly (PA) to be emerged in the surface without the completion remaining is removed.

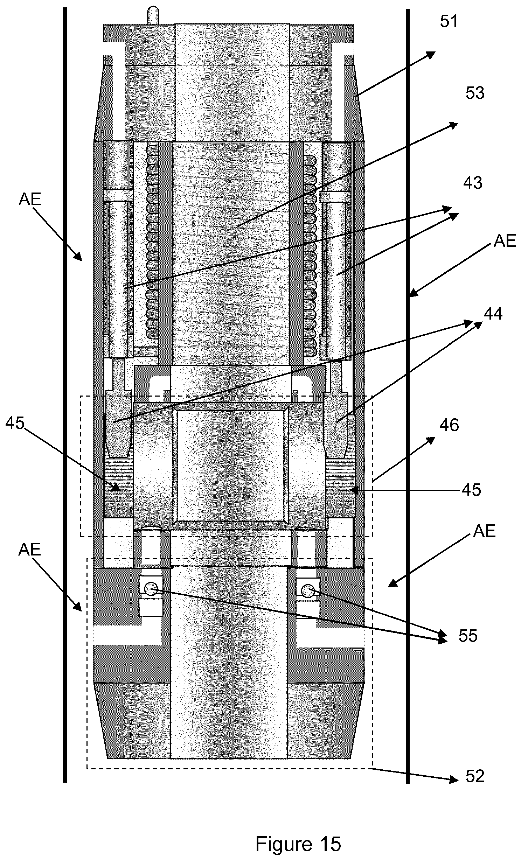

Figure 15 discloses an embodiment of the shut-off valve (CV), where it is possible to note the linear actuator (43), responsible for opening and closing of the production column and, inversely, of the annular space (AE). Together with linear actuator (43) there is a rack (44) arranged in contact with a gear (45) that, when displaced, provokes the shut-off valve body (46) turn.

Also in figure 15, it is possible to note the presence of a spiral reservoir (53) connected to the linear actuator (43), the said spiral reservoir (53) is detailed further on.

Gears (45) are constructed with the ratchet system (47), such that the shut-off valve body (46) rotates only in one direction.

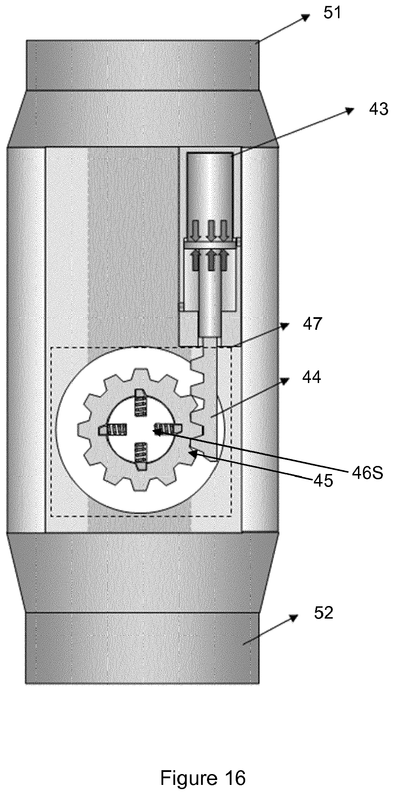

Figure 16 illustrates a cross side view of the system of gear (45) and rack (44), where it is possible to note the arrangement of the ratchet system (47), this system formed by return elastic elements (48) pressing projections at angle (49) against the gear inner part (45). The said gear inner part (45) has cavities (50) for accommodating projections at angle (49). In this image, the linear actuator (43) and rack (44) operation is apparent. Also in figure 16, it is possible to note the upper connection flange (51) and the lower connection flange (52), both responsible for associating the shut-off valve (CV) wherever it is necessary.

Image 17 highlights the linear actuator (43) operation associated to the rack (44) operating the ratchet system (47) formed by the gear (45) having cavities (50), return elastic elements (48) and projections at angle (49).

In image 18, an exploded view depicts the shut-off valve (CV) components. When moving the linear actuators (43), associated to racks (44), in the ascending or descending direction, will result in the gear rotation (45) in the clockwise or counter-clockwise direction. In case of descending movement by linear actuators (43), projections at angle (49), forced by the return elastic elements (48) against the cavities (50) present in the gears (45), will force the grooved cylindrical shaft (46S) rotation, being the said grooved cylindrical shaft (46S) joint to the shut-off valve body (46), the latter rotates, causing to open or close of the drilled well and, in , causing to open or close the annular space (AE). On the other hand, when actuated by the racks (44) in ascending direction, gears (45) rotate in the counter-clockwise direction without transmitting the rotation for grooved cylindrical shaft (46S) due to the fact that the projections at angle (49) and return elastic elements (48) are compressed inside the cavities (50) of the grooved cylindrical shaft (46S), allowing the free rotation of the gears wheels (45). That is, only during descending movements of the linear actuator (43) it is allowed to transmit the rotation for shut-off valve body (46) and, thus, drive the shut-off valve (CV) opening and closing.

During rises, by depressurizing the well annular space (AE), the spiral reservoir (53), operating as spring, withdraws the linear actuators (43) back to above not allowing the shut-off valve body (46) to move. This fact is important, since it is not necessary to keep the annular space (AE) pressurized all the time to allow the valve maintenance in a certain position. Therefore, a complete cycle of pressurization and depressurization is necessary to establish a certain position in the valve. It is highlighted that this device allows its opening variation. With that, it is possible to operate it out of the open and closed positions, only.

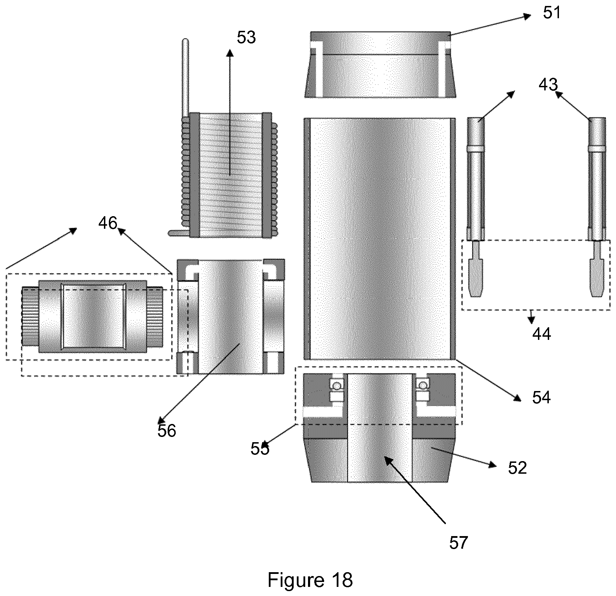

Also in figure 18, it is possible to note a cylindrical wrap (54), associated to the upper connection flange (51) and to the lower connection flange (52), in order to have all the set forming the shut-off valve (CV), ending the mount. The said shut-off valve (CV) mount is simple due to the tiny amount of components. The lower connection flange (52) mounting is started. This component will be leaked axially by one greater hole (57), where produced fluids will pass and, concentrically, by one or more smaller flange holes (55) where the fluid of completion will pass resulting from the annular space (AE) during reverse circulation operations. Such flange holes (55) will be provided from retention valves to allow the flow in single direction of the annular space (AE) to the column. Over the lower connection flange (52), the valve shell (56) is mounted. The valve shell (56) has shell holes (57) that, in the valve shell (56) mounting over the lower connection flange (52), they must be aligned with the flange holes (55). Finally, the shut-off valve body (46) is inserted into the valve shell (56), forming the main mechanism of the shut-off valve (CV).

The seating system between the parts was implemented in the metal x metal modality, without limiting to them. It is highlighted that the shut-off valve body (46) shall also have side holes perpendicular regarding the central hole, where the produced fluids of the drilled well pass through, but without coinciding in order to allow reverse circulations with the production hole closed, preventing the well to absorb fluids. The spiral reservoir (53) is mounted with linear actuators (43) and upper connection flange (51), over the cylindrical wrap (54).

Image 19 depicts ratchet system components (47), which are responsible for causing the shut-off valve body (46) rotation in a single direction. In this image, it is possible to note the grooved cylindrical shaft (46S), the gear (45), the set of projections at angle (49) and return elastic elements (48) and, finally, the ratchet system mounting (47).

Image 20 illustrates, in plant, the main mechanisms of the shut-off valve (CV). It is possible to note the presence of cylindrical wrap (54) having the valve shell (56), the shut-off valve body (46), the linear actuators (43) and gears (45).

Figures 21.1, 21.2, 21.3 and 22 disclose an embodiment for a system for controlling valve (6) associated to shut-off valve (CV), such that to provide control thereof.

Figure 21.1 refers to shut-off valve (CV) during a flow being produced from the drilled well. Figure 21.2 illustrates the shut-off valve (CV) during a production stop and, finally, image 21.3 illustrates the shut-off valve (CV) in the well reopening wherein it becomes necessary to pressurize the annular space.

In figure 21.1, the control mechanism (CM) is not driven by the inner sleeve (17), since there is a flow being produced and, therefore, keeping the said inner sleeve (17) in an upper position. In this position, the mechanic actuator (58) is extended and the drainage hole (60) does not allow the fluid to pass through the primary duct (63). Such primary duct (63) connects the production main hole to the linear actuator (43), such that the fluid pressure, which is being produced, is the same acting over the linear actuator (43). In this position, the differential piston (61) does not allow the pressure of the annular space (AE) to be detected by the hydraulic actuator (59), such that the pressure performed over the said hydraulic actuator (59) is the pressure resulting from the primary duct (63), which is in the same pressure of the fluids being produced from the drilled well. It is also previewed an anti-return valve, or one way valve (V) arranged in the communication between the annular space (AE) and the shut-off valve (CV) internal part.

According to image 21.2, when the flow is stopped, the first actuation mean (18) displaces the inner sleeve (17) against the mechanic actuator (58), such that this allows the fluid, being produced, pressure to pass towards the hydraulic actuator (59), displacing it to the left. Provided with drainage hole (60), the hydraulic actuator (59) connects the upper and lower portions of the primary duct (63), such that linear actuator (43) is displaced in the ascending direction. In this position, the differential piston (61) is found in the arrangement presented in figure 21.1, since the annular space (AE) was not pressurized, necessary pre-requirement so the said differential piston (61) is displaced. Also in this image, it can highlight that the secondary elastic element (60), associated to the mechanic actuator (58) is compressed.

Figure 21.3 illustrates one instant wherein the annular space (AE) was pressurized and displaced the differential piston (61) to the right, what opened the passage for the annular space fluid to fill a secondary duct (64), being the said secondary duct (64) communicating with the left side of the hydraulic actuator (59), such that the said hydraulic actuator (59), under the annular space (AE) pressure displaced to the right, so the drainage hole (60) cuts the communication between the upper and lower part of the primary duct (63). This causes the pressure of the annular space (AE), directly connected to the linear actuator (43), to displace the said linear actuator (43), forcing the ratchet system (47) rotation, opening the shut-off valve (CV). Accordingly, the pressure actuation of the annular space (AE) over the said linear actuator (43) was clear.

The amount of teeth in the rack (44) will determine the opening size in the shut-off valve body (46) by cycle of pressure x depressurization. Thus, it is understood that the opening and closing process is not continuous, but stepped, also such stepping may be formed by small increments.

Figure 22.1 illustrates the shut-off valve (CV) with shut-off valve body (46) controlling only the communication between the annular space (AE) and the duct inside the valve conducting the produced fluids from the drilled well, according to the present invention teachings. More specifically, figure 22.1 discloses a second embodiment of the shut-off valve (CV) in a position allowing the communication between the annular space (AE) and the duct inside the valve.

Figure 22.2 illustrates one instant wherein, by acting the control fluids in the linear actuator (43), the rack (44) is displaced, inducing the gear (45) to rotate, causing the shut-off valve body (46) to assume an intermediate position.

Figure 22.3 illustrates one instant where the shut-off valve body (46) is in the blocking position of the connection between annular space (AE) and the production column internal part. By acting the linear actuator (43), the rack (44) displaced the gear (45) that induced the shut-off valve body (46) to rotate. It is important to highlight that shut-off valve (CV) was described using a linear actuator (43) for displacing its moving parts, so those skilled in the art will value this knowledge and will know to apply other rotating options as the hydraulic engines, electric engines, among other examples.

Continuing with the completion system now proposed, figure 23 shows an embodiment of the selective valve (SV) of the present invention, having its elements indicated: selecting valve body (65), sealing piston (66) comprising primary actuation mechanism (67), primary hole (19), flow tube (68) comprising secondary actuation mechanism (69), lower end (71) and upper end (72), secondary hole (20) and, finally, the fluid entry (70).

During the gas injection operations in the annular space of the completion housed in the drilled well for performing the gas-lift elevation, the said gas will enter into the selective valve (SV) through the fluid entry (70) and the "upstream x downstream" pressure differentials will reach the force of the primary actuation mean (67), causing the sealing piston (2) to lower and the gas to pass inside the production column that fits this completion through primary hole (19), but the viscosity of this first gas will not be able to generate enough friction in the flow tube (68) walls enough to reach the secondary actuation mean (69) force. The gas injected in the annular and directed by the selective valve (SV) to the primary hole (19), will enter into the gas-lift mandrel (21) and will gasify the production column, reducing the density of the produced mixture, as currently happens. It is necessary to highlight that the gas, as soon as enter into the production column, remains inside the space formed between upper locator feddtrhu (6A) and lower locator feddtrhu (6B), promoting the proper sealing of the completion fluid, such that the said fluid can enter only into the gas-lift mandrel (21), reducing the density of the produced fluid.

Figure 24 depicts an embodiment if the completion fluid is liquid, where the Hydrodynamic friction caused in the flow tube (68) walls will be big enough to generate a hydrodynamic drag of the said flow tube (68) downwards, such that this reaches the force of the secondary actuation mean (69) and compressing the "sealing piston" (66) against the upper and lower faces thereof. This promotes the two-way sealing. At this point, the opening present in the upper end (72) will coincide to the secondary hole (20) and the fluid will enter into the production column through the said secondary hole (20).

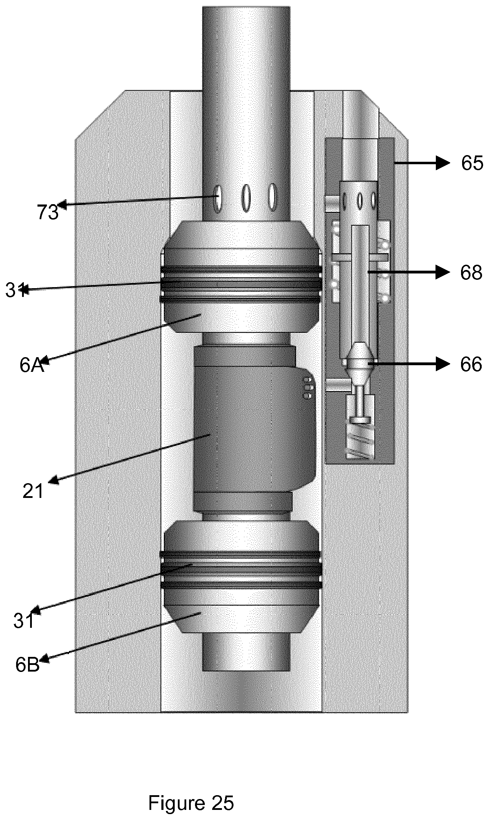

Figure 25 illustrates the selective valve (SV) of the present invention assembled in a completion for wells, where it is possible to note the paths the completion fluid can take after the selective valve (SV). When diverting the path inside the gas-lift mandrel (21) and enter by the perforation (73) arranged in the lifting main tube of the completion, the completion fluid does not pass inside the gas-lift mandrel (21), in a way to preserve it, once gas-lift mandrels (21) do not support higher viscosities fluids (water, oil, chemicals, etc.). Other reason for using the selective valve (SV) is the fact of allowing flow rates of pumped liquids to be big enough to promote effective cleaning of the production column, preserving the integrity of the gas-lift mandrels (21) installed in the production column of the completion now proposed by the present invention.

Figures from 26 to 28 disclose an electro-hydraulic (EP) connector for completion of drilled wells, where electro-hydraulic connectors (EP) allow the disconnection of the production column (1) part for maintenance, according to the present invention teachings.

According to figure 26A, there is the external assembly (23) of the electro-hydraulic (EP) connector where it is possible to view the system of stamps (83) that are responsible for displacing the lower electrical contacts protector (78) by compressing the lower spring (79). The upper surface (84) is responsible for displacing the upper electrical contacts protector (85) by compressing the upper spring (86). In this figure, the upper spring (86) is extended and the upper electrical contacts protector (85) is positioned in order to provide the correct protection to outer electric connectors (87). The electrical connection system also occurs in a modular form, it is enough to add more electrical connection assemblies.

In the figure 26B, it is possible to view the internal assembly (22) of the electro-hydraulic (EP) connector in half cut. The threaded element (74) is responsible for interconnecting the internal assembly (22) of the electro-hydraulic (EP) connector to the production column remaining. The polished region of the connector (75) is responsible for ensuring the water-tightness of a hydraulic connection (76) operating from one elastomeric elements assembly for connector (77) (these elements are present in the external assembly (23) of the electro-hydraulic (EP) connector) ensuring the complete sealing of the said hydraulic connection (76). The several hydraulic connections (76) occur in modular form, being possible to increase the number of connecting points, or reduce them. When the electro-hydraulic (EP) connector is decoupled the lower electrical contacts protector (78) are in the extended position through the force action performed by the lower spring (79) in order to ensure proper protection of the internal electric connectors (80). The internal tubular region (81) is responsible for supporting well pressures and mechanical stresses of the production column. Between the polished region of the connector (75) and the internal tubular region (81) the region located for allocating hydraulic and electric lines (82) such that the said lines do not experience obstacles occurring inside the internal tubular region (81).

According to figure 27, it can be seen the electro-hydraulic (EP) connector components when it is in the "connected" position. In this view, the internal assembly (22) is dully coupled to the external assembly (23) and internal electric connectors (80) and external electric connectors (87) are coupled, besides the hydraulic connection (76) that is also dully connected. It is possible to note that upper (86) and lower (79) springs are compressed, internal and external electric connectors (80 and 87) are aligned and dully connected and also hydraulic connectors (76) are dully positioned in the polished region (75) in order to ensure total water-tightness of the hydraulic lines.

Figures 28.1 and 28.2 depict a sequence of removal of pumping device (4) by disconnecting the electro-hydraulic (EP) connector, according to the present invention.

In figure 28.1 it can be noted the accessories of a lower completion (88), generically represented. In this illustration, the pumping device (4), generally formed by the engine and pump assembly are represented in a merely illustrative manner and they are connected to the lower completion (88) remainder through electro-hydraulic (EP) connector of the present invention.

Figure 28.2, as figure 28.1, illustrates a smart completion provided with electro-hydraulic (EP) connector, with the difference of being in the disconnected position. In this figure, it is easy to view how the present invention will facilitate the decoupling between the upper part having the pumping device (4) and lower completion (88), for maintenance of the said pumping device (4), formed by a BCS, for example. It is noticeable that the external assembly (23) of the electro-hydraulic (EP) connector is associated to the upper part that was removed from the smart completion and the internal assembly (22) is associated to lower completion (88) of the said smart completion.

Figure 29 discloses a second embodiment for electro-hydraulic telescopic joint (TJ) of the present invention. As illustrated, this tool is composed of the following elements:

Tubular lower component with the following characteristics: outer thread (27) for connecting into electro-hydraulic (EP) connector, sealing (89) in the upper part between the outer tube (24) and the inner tube (25), hexagonal lock system (26) to avoid the inner column to rotate in false, performing torque transmission between the lower and upper component, secondary lock system (90) for column decline with the extension fixed totally in the closed position, external ring upper (91) and external ring lower (92) for aligning external hydraulic and electric lines, filling bars (93) of empty space between the external hydraulic and electric lines and, protection liner (94) of the internal hydraulic and electric lines.

Tubular upper component with the following characteristics: cylindrical top (95) with thread in the center to the inner tube (25); thread for connecting into the production column (96) and peripheral threads (97) for connecting hydraulic and electric lines.

The components comprise the electro-hydraulic telescopic joint (TJ) of the figure 29 are dully described below.

The inner tube (25) refers to a conventional expansion joint. The inner tube (25) is composed of one conventional polished cylinder sliding upwards and downwards, with sealing in the outer liner top. The defined sliding course for balance will depend on the constructive characteristics, but it can reach up to 6 meters.

The hexagonal lock (26) in the lower end of the inner cylinder (25) avoids the independent rotation, impairing torque. The protection liner (94) is responsible for connecting in the lower part of the column. The sealing (89) system with the inner cylinder (25) is located on the top. Internally, the protection liner (94) is machined with shape to keep the cylinder alone in case of rotation. The outer body is machined with grooves to partially house the conduction hydraulic and electric lines.

The protection liner (94) refers to a cylinder coating the outer lines, mechanically protecting against impacts on the lines and keeping the lines positioned so they do not remain out of the position. Hydraulic lines are miniatures of the main expansion joint, with one outer tube and one inner tube. The outer fixed and the inner sliding, with sealing of the outer tube top. The electric lines are similar to hydraulic lines, but with electric conduction purpose.

Those skilled in the art will appreciate the knowledge presented herein and may reproduce the invention in the embodiments presented and in other embodiments within the scope of the attached claims.

## Claims

1. Completion system for drilled wells **characterized by** comprising:
a. valves mechanisms;
b. drives;
c. sensors;
d. expandable joint for adjusting the distance between system components;
e. shut-off valve;
f. system of controlling the shut-off valve drive;
g. control valve of operation and maintenance;
h. decoupling/expandable electro-hydraulic connector.

2. Exploration system of drilled well **characterized by** comprising elevation means of fluid contained in the drilled well, said elevation mean being a set of submerged centrifugal pump and/or system of gas lift, the elevation mean being arranged inside a capsule (IT) housed in a removable manner inside the drilled well.

3. Exploration system of multiple producing zones in drilled well **characterized by** comprising:
a. at least two extraction regions, being the extraction regions isolated from each other in the annular region; and
b. elevation assembly (PA) arranged inside a coating capsule (IT); being the annular region a perimeter clearance existing between the elevation assembly (PA) and the inner wall of the coating capsule (IT).

4. Method of extraction in drilled well **characterized by** comprising an exploration system of multiple producing zones wherein the system is provided with locators feed-thru (6) with packer seal bore (11) and elastomer for sealing.

5. Capsule for packaging components of exploration system of drilled well **characterized by** comprising a hollow inner region and a housing outer region inside the drilled wells, the capsule being able of:
a. housing elevation and control components of extracting the fluid contained in the drilled well; and
b. allowing the simultaneous mounting and removal of the said elevation and control elevation of extracting from inside the well.

6. Exploration method in drilled well with capsule for packaging the components **characterized by** comprising the following steps:
a. inserting a coating capsule (IT) inside a drilled well;
b. inserting an elevation assembly (PA) inside the coating capsule (IT).

7. Telescopic joint for adjusting the mounting distance between components of an exploration system of drilled well **characterized by** comprising linear extension means for connecting the components of an elevation assembly (PA) and/or for adjusting the total length of elevation assembly (PA).

8. Isolating valve for exploration system of drilled well **characterized by** comprising opening and closing drive through pressure control applied in the annular space (AE).

9. Method for closing and isolating formations in drilled well **characterized by** comprising at least one step wherein a shut-off valve (CV) is controlled through hydraulic means.

10. System for drive controlling the isolating valve for exploration system of drilled well **characterized by** comprising opening and closing drive through:
a. pressure control applied in the annular space (AE); and
b. pressure and/or drag resulting from the kinetic energy imposed to the high fluid.

11. Selecting valve of operation fluid **characterized by** comprising a body of the selecting valve (65) comprising two passages in order to segregate the flow of a primary fluid of the flow of a secondary fluid, being the primary fluid provided with at least one property different from the secondary fluid.

12. Use of selecting valve for controlling the operation and maintenance of gas lift equipment **characterized in that** the selecting valve is as defined in claim 8 and is intended to an exploration system of drilled well.

13. Electro-hydraulic connector for exploration system of drilled well **characterized by** comprising:
a. at least one internal assembly (22); and
b. at least one external assembly (23)
wherein:
- the internal assembly (22) is able to be coupled to external assembly (23);
- the internal assembly (22) has electrical connections (87 and 80) and hydraulic connections (76);
- the external assembly has electrical connections (87 and 80) and hydraulic connections (76); e
- the connections are allocated in a way they coincide when the coupling takes place.

14. Electro-hydraulic expansion joint **characterized by** comprising:
a. lower tubular component provided with:
• thread in the lower part for connecting into the electro-hydraulic connector;
• sealing in the upper part between the lower component and the inner cylinder;
• hexagonal lock system able to prevent the internal column turn and to allow the torque transmission between the lower and upper component;
• lock system for column decline with the extension fixed in the totally closed position;
• external ring (upper and lower) for aligning external hydraulic and electric lines;
• bars for filling the empty space between external hydraulic and electric lines; and
• protection liner of internal hydraulic and electric lines,
b. upper tubular component provided with:
• cylindrical top (95) with thread in the center for inner sliding tube;
• thread for connection in the production column (96); and
• peripheral threads (97) for connecting hydraulic and electric lines.

15. Exploration method in drilled well **characterized by** using an electro-hydraulic connector and/or electric-hydraulic joint according to claims 13 and 14.

16. Use of exploration/completion system of drilled well **characterized by** using a system according to claims 1, 2 and/or 3 and it is intended to hydrocarbons extraction in drilled wells.
